**Europäisches Patentamt**

**European Patent Office**

**Office européen des brevets**

(19)

(11) Veröffentlichungsnummer: **0 082 916**
**A2**

(12) # EUROPÄISCHE PATENTANMELDUNG

(21) Anmeldenummer: **82105223.0**

(22) Anmeldetag: **15.06.82**

(51) Int. Cl.³: **B 60 T 13/14**
**B 60 T 8/04, B 60 T 17/22**

(30) Priorität: **24.12.81 DE 3151292**

(43) Veröffentlichungstag der Anmeldung:
**06.07.83 Patentblatt 83/27**

(84) Benannte Vertragsstaaten:
**DE FR GB IT SE**

(71) Anmelder: **ROBERT BOSCH GMBH**
**Postfach 50**
**D-7000 Stuttgart 1(DE)**

(72) Erfinder: **Leiber, Heinz**
**Theodor-Heuss-Strasse 34**
**D-7141 Oberriexingen(DE)**

(74) Vertreter: **Böer, Wilfried et al,**
**Robert Bosch GmbH c/o Wilfried Böer**
**Robert-Bosch-Platz 1**
**D-7016 Gerlingen-Schillerhöhe(DE)**

(54) **Bremsblockierschutzeinrichtung.**

(57) Es wird eine Bremsblockierschutzeinrichtung mit einem Mehrkreis-Bremskraftverstärker (1) vorgeschlagen. Dem Bremskraftverstärker (1) ist ein 3/2-Wege-Megnetventil (32) nachgeschaltet, das in einen an sich geschlossenen Bremskreis (I) eingesetzt ist und das nach dem Überschreiten einer bestimmten Druckgrenze umschaltet und einen offenen Bremskreis (II) mit dem geschlossenen Bremskreis (I) verbindet.

Auf diese Weise ist die vorteilhafte Anwendung eines geschlossenen Bremskreises (I) möglich, so daß eine kleine und leichte Bauweise des Bremskraftverstärkers (1) zu erreichen ist. Desweiteren sind mit Hilfe von Schaltern (10, 26, 27, 33, 50), die zum Teil am Bremskraftverstärker (1) angeordnet sind und mit Hilfe einer die Schaltsignale der Schalter auswertenden elektronischen Schalteinrichtung (31) Defekte in der Anlage leicht zu erkennen, und es ist darüber hinaus mit Hilfe einer logischen Schaltung eine Testschaltung für die Schalter möglich.

Die Bremsblockierschutzeinrichtung ist vorzugsweise anwendbar für Kraftfahrzeuge mittlerer Gewichtsklasse.

./...

EP 0 082 916 A2

FIG. 1

0082916

R. 17554

21.12.1981 He/Wl

ROBERT BOSCH GMBH, 7000 Stuttgart 1

Bremsblockierschutzeinrichtung

Stand der Technik

Die Erfindung geht aus von einer Bremsblockierschutzeinrichtung nach der Gattung des Hauptanspruchs. Eine derartige Bremsblockierschutzeinrichtung ist bekannt (DE-OS
27 03 760).

Bei dieser bekannten Bremsblockierschutzeinrichtung wird
eine Druckeinspeisung in den geschlossenen Bremskreis durchgeführt, und zwar abhängig von einer bestimmten Kolbenstellung im Hauptbremszylinder oder auch von bestimmten Schalter-Stellungen von am Bremsverstärker angeordneten, dessen
verschiedene Stellungen abtastenden Schaltern. Bei entsprechenden Signalen wird dann Druckmittel aus dem Speicher einer Energieversorgungseinrichtung in den geschlossenen Bremskreis eingespeist, um dort einen Bremsdruck zu erzeugen.

Solche bekannten Bauarten sind zwar einfach im Aufbau, sie
sind jedoch außerordentlich fehlerkritisch, da bei einem
Fehlerfall der Speicherdruck und nicht der Bremsdruck im
beschickten Bremskreis wirksam ist.

. . .

## Vorteile der Erfindung

Die Bremsblockierschutzeinrichtung mit den kennzeichnenden
Merkmalen des Hauptanspruchs hat demgegenüber den Vorteil,
daß ein geschlossener Bremskreis verwendet werden kann und
daß bei einem Defekt nicht der Speicherdruck sondern ein
Bremsdruck in den geschlossenen Bremskreis eingesteuert
wird. Außerdem hat der Mehrkreis-Bremsverstärker einen
leichten und kompakten Aufbau, unter anderem deshalb, weil
die Hauptzylinderkolben nur für eine Hilfsbremswirkung ausgelegt zu werden brauchen.

Gemäß den Merkmalen der Unteransprüche ist es von Vorteil,
daß für die Bremsblockierschutzeinrichtung nur ein geringer
Aufwand nötig ist. Auch ist es vorteilhaft, daß Defekte
in einem Bremskreis leicht zu erkennen sind, daß ferner
eine bei einer Bremsblockierschutzeinrichtung übliche
Testschaltung zur Überprüfung von Schaltern und von einer
Gatterlogik einsetzbar ist und daß die Schalter bezüglich
ihrer jeweiligen Schaltstellung ebenfalls überprüfbar sind.

## Zeichnung

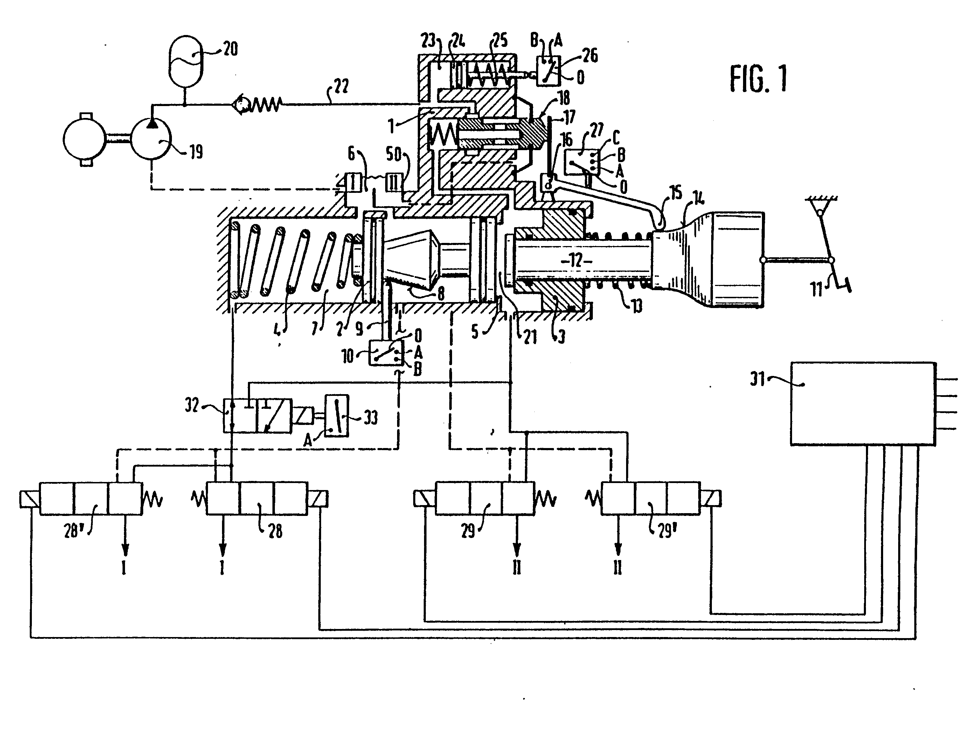

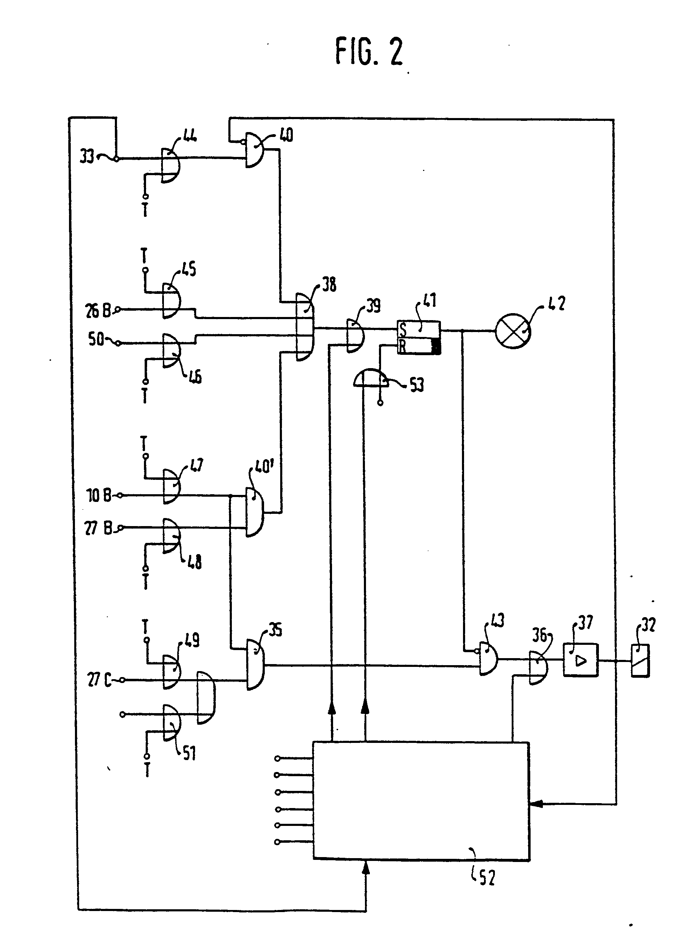

Ein Ausführungsbeispiel der Erfindung ist in der Zeichnung
dargestellt und in der nachfolgenden Beschreibung näher
erläutert. Es zeigen: Figur 1 ein Schema einer Bremsblokkierschutzeinrichtung und Figur 2 ein Schaltbild einer
logischen Schaltung.

## Beschreibung des Ausführungsbeispiels

Eine Bremsblockierschutzeinrichtung hat einen Zweikreis-
Bremskraftverstärker 1, in dem hintereinander zwei (Tandem) Kolben 2 und 3 angeordnet sind. Der vordere Kolben 2 wird
gewöhnlich von einer Rückholfeder 4 an einer Gehäuse-Ringschulter 5 fixiert und hält in dieser Stellung eine über
ein Schnüffelloch bestehende Verbindung zwischen einem Nachfüllbehälter 6 und einer Hauptzylinder-Arbeitskammer 7
offen. An die Kammer 7 ist ein sogenannter "geschlossener"
Bremskreis I angeschlossen.

Der Kolben 2 hat eine Schrägfläche 8, auf die ein Schaltstift 9 eines Schalters 10 aufgesetzt ist. Dieser Schalter 10 hat eine Ausgangsstellung Null und zwei Kontaktstellungen A und B.

Der zweite Kolben 3 ist ein Ringkolben, der auf einen von
einem Pedal 11 betätigbaren Stößel 12 aufgesetzt ist. Eine
den Stößel 12 umgebende Feder 13 ist vorgespannt so zwischen den Stößel 12 und den Kolben 3 eingesetzt, daß beide
Teile 3 und 12 bei geringen Pedalkräften verspannt sind
und sich gegenseitig nicht verschieben.

Der Stößel 12 ist mit einer Steuerkurve 14 versehen, an
der ein Ende 15 eines Hebels 16 entlanggleiten kann, dessen
anderes Ende 17 als Blattfeder ausgebildet ist, um hier
einen Wegsimulator zu bilden. Das Ende 17 ist dazu bestimmt,
ein Steuerventil 18 zu betätigen. Dieses Steuerventil 18
liegt zwischen einer im wesentlichen aus Pumpe 19 und Speicher 20 bestehenden Energieversorgungseinrichtung 19/20
und dem drucklosen Nachfüllbehälter 6. Es verbindet eine
zwischen den beiden Kolben 2 und 3 liegende Arbeitskammer
21 entweder mit einer Entlastungsstelle (Nachfüllbehälter
6) oder mit der Energieversorgungseinrichtung 19/20.

...

An die Arbeitskammer 21 ist ein Bremskreis II angeschlossen, der einen sogenannten "offenen" Bremskreis darstellt. Eine von der Energieversorgungseinrichtung 19/20 zum Bremskraftverstärker 1 führende Druckleitung 22 hat Verbindung zu einer Arbeitskammer 23, die von einem Kolben 24 begrenzt wird, der über einen Stößel 25 einen zweiten Schalter 26 betätigen kann. Dieser Schalter 26 hat eine Ausgangsstellung Null und zwei Kontaktstellungen A und B. Außerdem hat er eine Ansprechverzögerung, die durch die Federgegenkraft und die Reibung des Kolbens 24 gegeben ist.

Die Bewegung des Hebels 16 wird von einem dritten Schalter 27 überwacht, der eine Ausgangsstellung Null und drei Kontaktstellungen A, B und C einnehmen kann.

Die beiden Bremskreise I und II führen über je zwei 3/3-Wege-Magnetventile 28, 28' bzw. 29, 29' zu ingesamt vier, nicht dargestelten Radbremszylindern, zwei an einer Vorderachse und zwei an einer Hinterachse eines Kraftfahrzeugs. An den Fahrzeugrädern sind Sensoren angeordnet, die ihre Signale an eine elektronische Schalteinrichtung 31 geben. Die Signale werden dort verarbeitet und entsprechend den Gegebenheiten werden dann die Magnete der 3/3-Wege-Magnetventile 28 bis 29 angesteuert, um den Bremsdruck in den beiden Bremskreisen I und II der Fahrbahnbeschaffenheit bzw. dem Radverhalten anzupassen. Diese Einrichtung ist eine Bremsblockierschutzeinrichtung 28 bis 31.

Im Bremskreis I liegt ein weiteres 3/2-Wege-Magnetventil 32, das in seiner dargestellten Lage eine freie Verbindung für den Bremskreis I aufweist. Seine zweite, bei Strombetätigung erreichte Stellung bewirkt ein verstärkerseitiges Abriegeln des Bremskeises I und ein Anschließen des (offenen) verstärkerseitigen Bremskreises
II an den geschlossenen (radzylinderseitigen) Bremskreis
I. Am Magnetventil 32 ist ein vierter Schalter 33 angeordnet, der die jeweilige Schaltstellung des Magnetventils
32 überwacht und der zu diesem Zweck eine Ausgangsstellung
Null und eine Kontaktstellung A hat. Schließlich ist am
Nachfüllbehälter 6 noch ein Schalter 50 zum Erfassen der
Füllmenge vorgesehen.

Alle fünf Schalter 10, 26, 27, 33, 50 sind auf - zwecks
Erhaltung der Übersichtlichkeit - nicht dargestellte Weise
in einer logischen Schaltung miteinander verknüpft und
diese logische Schalteinrichtung ist in die elektronische
Schalteinrichtung 31 integriert.

Wirkungsweise

Beim Betätigen des Bremspedals 11 wird zunächst der Rücklauf im Steuerventil 18 geschlossen und dann aus beiden
Arbeitskammern 7 und 21 Druckmittel in die Bremskreise I
und II geschickt. Im Bereich der Teilbremsung wird also
kein Hilfsdruck eingespeist.

Bei höheren Pedaldrücken schaltet aber das Steuerventil 18
ganz um. Jetzt wird also die gespeicherte Energie wirksam,
was den Vorteil hat, daß die beiden Hauptzylinder-Kolben
2 und 3 sehr klein dimensioniert werden können. Und zwar
richtet sich die Dimensionierung der Kolben 2 und 3 nach
der Hilfsfunktion, weil bei Ausfall der Energieversorgung
infolge beschränkter Pedalkräfte ohnehin kein hohes Druckniveau erzeugt werden kann. Dementsprechend wird ein kleineres Volumen in die Bremskreise befördert.

In der Stellung, die der Kolben 2 im Hauptzylinder bei
Hilfsdruck-Einspeisung erreicht, wird zugleich das 3/2-
Wege-Magnetventil 32 umgeschaltet, so daß die Arbeitskammer 7 abgeschlossen und der Kolben 2 blockiert ist, was
zum Blockieren des Stößels 12 führt.

Hierin liegt ein großer Vorteil der Einrichtung, weil bei
vielen bekannten Bauarten, die mit Druckeinspeisung arbeiten, der Pedal-Stößel bis zum Anschlag des Bremspedals am
Bodenblech des Fahrzeugs weiterbewegt werden kann.

Zu der Arbeit der fünf Schalter 10, 26, 27, 33 und 50 ist
noch folgendes zu sagen:

Durch eine besondere Ausbildung der Steuerkurve 14 ist erreicht, daß Bremskreisausfall oder auch eine defekte
Primärdichtung im Bremskraftverstärker 1 über eine entsprechende Schaltsignalkombination erfaßt werden kann,
was dann zur Folge hat, daß die Druckeinspeisung ausgeschaltet wird.

Am Schalter 26 bewirkt der Druck des Speichers 19 in Kontaktstellung A eine Einschaltung der Pumpe 19, und in
der Kontaktstellung B erfolgt ein Warnsignal, weil der
Speicherdruck zu weit abgesunken ist. Diese Einrichtung
ist wichtig für die Sicherheit und kann gegebenenfalls auch
redundant aufgebaut werden.

Der Schalter 10 spricht etwa nach 20 % des möglichen Kolbenhubs an (Kontaktstllung A). Seine Kontaktstellung B erreicht
er etwa nach 40 % des Kolbenhubes.

...

Der Schalter 27 am Hebel 16 schaltet in der Kontaktstellung A das Bremslicht ein. Die Kontaktstellung B entspricht der Teilbremsstellung bei mittleren Bremsdrücken, und die Kontaktstellung C wird nur bei relativ hohen Bremsdrücken erreicht.

Der Schalter 33 spricht an bei der Funktion des Magnetventils 32; er tastet mechanisch die Ventilstellung ab und dient zur Überwachung des richtigen Funkionierens dieses Magnetventils 32.

Die in der Figur 2 dargestellte logische Schaltung ist der elektronischen Schalteinrichtung 31 beigeordnet. Die logische Schaltung weist auf der linken (Eingangs-)Seite die Signale der Schalter 33, 26, 50, 10 und 27 und auf der rechten (Ausgangs-)Seite das 3/2-Wege-Magnetventil 32 auf. Den Schalter-Signalen nachgeordnet sind ODER-Gatter 44, 45, 46, 47, 48, 49 und 51, über die jeweils auch ein Testsignal T einer Testschaltung 52 eingebbar ist. Den ODER-Gattern 47, 48, bzw. 49, 51 ist je ein UND-Gatter 40' und 35 nachgeordnet, von denen das UND-Gatter 35 über ein weiteres UND-Gatter 43 mit negativem Eingang und ein ODER-Gatter 36 zu einer Leistungs-Endstufe 37 und von dort zum Magnetventil 32 geführt ist.

Desweiteren ist ein zentrales ODER-Gatter 38 vorgesehen, das mit Signalen von den UND-Gattern 40' und 40 und von den ODER-Gattern 45 und 46 ansteuerbar ist. Hinter dem zentralen ODER-Gatter 38 liegt ein weiteres ODER-Gatter 39, das auch von der Testschaltung 52 angesteuert werden kann. Anschließend ist ein ODER-Gatter 53 vorgesehen, das entweder von der Testschaltung 52 oder von einem Werkstatt-Testsignal ansteuerbar ist. Hinter den ODER-Gattern 39 und 53 sind ein Fehlerspeicher 41 und eine Warnlampe 42 vorgesehen.

...

Zur Wirkungsweise ist folgendes zu sagen:
Die Druckeinspeisung bei höheren Bremsdrücken erfolgt bei
den Schalter-Kontaktstellungen 27C und 10B. Die entsprechenden Schaltsignale wirken auf das UND-Gatter 35, das über
das zweite UND-Gatter 43 mit negiertem Eingang die Leistungsstufe 37 des 3/2-Wege-Magnetventils 32 ansteuert. Bei relativ kleinen Bremsdrücken kann bereits eine Arbeit des
Blockierschutzes z.B. auf Eis erfolgen, was im Bremskreis
I bewirkt, daß zur Druckreduzierung Druckmittel aus dem
Bremskreis in eine Rücklaufleitung abgelassen wird, in dem
das 3/3-Wege-Magnetventil 28 oder 28' die entsprechende
Schaltstellung einnimmt. Zur nachfolgenden Druckerhöhung
bewegt sich der Kolben 2 schrittweise. In der Folge der
einzelnen Regelzyklen erreicht der Kolben 2 dann eine
Stellung, die am Schalter 10 die Kontaktstellung B bewirkt.
Auch dabei erfolgt noch eine Druckeinspeisung, weil das
Blockierschutzsignal über das ODER-Gatter 38 am ODER-Gatter 39 ansteht.

Verschiedene Defekte schließen nun eine Druckeinspeisung
vom Bremskreis II in den Bremskreis I aus.

Eingangs wurde die Überwachung des 3/2-Wege-Magnetventils
32 über den Schalter 33 erwähnt. Diese Überwachung ist
wichtig und sicherheitsrelevant, weil bei einem Bremskreisausfall im Kreis I und defektem Magnetventil 32 (z.B.
durch Hängenbleiben in einer Schaltstellung) das Druckmittel aus dem Bremskreis II erschöpfen kann und dann beide
Bremskreise I und II ausfallen.

Ein solches Hängenbleiben des Magnetventils 32 wird durch
die im oberen Teil der Figur 2 dargestellten Gatter-Kombination erfaßt.

...

Liegt z.B. kein Ansteuersignal zum Magnetventil 32 vor und ist der Schalter 33 in Kontaktstellung, so ist dies ein Indiz für einen Fehler. Dabei gelangt ein Ausgangssignal des UND-Gatters 40 über das ODER-Gatter 38 zu dem Fehlerspeicher 41, der dann gesetzt wird. Ein Ausgangssignal des Fehlerspeichers 41 steuert die Warnlampe 42 an und sperrt zugleich das UND-Gatter 43 zur Druckeinspeisung, so daß also über das Magnetventil 32 kein Druck eingespeist wird.

Dieselbe Sperrwirkung haben die Schaltersignale, die zu geringem Speicherduck (26B) oder zu geringes Niveau (Schalter 50) im Vorratsbehälter 6 anzeigen. Auch diese Signale wirken über das ODER-Gatter 38 zum Fehlerspeicher 41.

Eine Kombination der Schaltersignale 10B und 27B wird verwendet, um Bremskreiskreisausfall oder schlechte Entlüftung im Bremskreis I zu erfassen. Wird schon in einem Teilbremsbereich (Schalter-Kontaktstellung 27B) der Kolben 2 weit in eine Stellung entsprechend der Schalter-Kontaktstellung 10B ausgefahren, so erfolgt ein Setzen des Fehlerspeichers 41 und dadurch ebenfalls eine Sperrung der Druckeinspeisung. Da dieser Teil der Gatter-Logik sicherheitsrelevant ist, wird er, ähnlich wie die sicherheitsrelevanten Gatter für die Bremsblockierschutzeinrichtung, ebenfalls von der Testschaltung 52 überprüft. Deshalb wirken über die ODER-Gatter 44, 45, 46, 47, 48, 49, 51 die Testsignale jeweils auf die Schaltersignalleitung, und diese Signale aktivieren wiederum in einer bestimmten, im Testprogramm festgelegten Reihenfolge die einzelnen Gatter und führen letztlich zur Ansteuerung des 3/2-Wege-Magnetventils 32. Auch die Funktion des Fehlerspeichers 41 wird getrennt in die Testschaltung 52 mit einbezogen bzw. von ihr überwacht.

R.

Ein Rücksetzen des Fehlerspeichers 41 geschieht neben Einwirken durch das Testsignal nur in der Werkstatt mit einem
entsprechenden Testgerät.

0082916

R. 17334

21.12.1981 He/Wl

ROBERT BOSCH GMBH, 7000 Stuttgart 1

Ansprüche

1. Bremsblockierschutzeinrichtung mit einem Mehrkreis-Bremskraftverstärker und mit von diesem versorgten Radbremszylindern, sowie mit dazwischen angeordneten Blockierschutzventilen, die über eine elektronische Schalteinrichtung ansteuerbar sind, dadurch gekennnzeichnet, daß in einem
Bremskreis (I bzw. II) ein zusätzliches 3/2-Wege-Magnetventil (32) angeordnet ist, das über die elektronische
Schalteinrichtung (Figur 2) durch Schaltsignale ansteuerbar ist, die vom jeweiligen Zustand des Bremsverstärkers
(1) über entsprechende Schaltmittel abgeleitet sind, und
das eine strombetätigte Schaltstellung aufweist, in der eine
Versorgungs-Verbindung des anderen Bremskreises (II bzw. I)
mit dem erstgenannten Bremskreis herstellbar ist.

2. Bremsblockierschutzeinrichtung nach Anspruch 1, dadurch
gekennzeichnet, daß der Bremskreis (I), in dem das 3/2-Wege-
Magnetventil (32) liegt, ein an sich geschlossener Bremskreis ist.

3. Bremsblockierschutzeinrichtung Anspruch 1 oder 2, dadurch
gekennzeichnet, daß das 3/2-Wege-Magnetventil (32) ansteuerbar ist nach dem Überschreiten einer bestimmten Druckgrenze
im Bremskraftverstärker (1).

...

4. Bremsblockierschutzeinrichtung nach Anspruch 2 oder 3, dadurch gekennzeichnet, daß das 3/2-Wege-Magnetventil (32) in seiner strombetätigten Umschaltstellung eine bremskraftverstärkerseitige Abriegel-Stellung für den geschlossenen Bremskreis (I) einnimmt.

5. Bremsblockierschutzeinrichtung nach einem der Ansprüche 1 bis 4, dadurch gekennzeichnet, daß am Bremskraftverstärker (1) verschiedene elektrische Schalter (10, 26, 27, 50) vorgesehen sind, deren Schaltsignale im Sinne einer Erkennung und Anzeige von Bremskreisausfall oder schlechter Entlüftung eines Bremskreises und/oder Ausfall der Bremskreisverstärkung in der elektronischen Schalteinrichtung (31) auswertbar sind.

6. Bremsblockierschutzeinrichtung nach einem der Ansprüche 1 bis 5, dadurch gekennzeichnet, daß die Druckeinspeisung über das 3/2-Wege-Magnetventil (32) bei einem Defekt im Bremssystem sperrbar ist.

7. Bremsblockierschutzeinrichtung nach einem der Ansprüche 1 bis 6, dadurch gekennzeichnet, daß ein dem Druck einer im wesentlichen aus Pumpe (19) und Speicher (20) bestehende Energieversorgungseinrichtung (19/20) unterliegender Schaltkolben (24) eines Schalters (26) durch Reibung und Federgegenkraft ansprechverzögert ist.

8. Bremsblockierschutzeinrichtung nach einem der Ansprüche 1 bis 7, dadurch gekennzeichnet, daß in der elektronischen Schalteinrichtung (31) Schaltmittel (Figur 2) vorgesehen sind, mit denen die Gatterlogik in einer Testschaltung (52) überprüfbar ist.

...

9. Bremsblockierschutzeinrichtung nach einem der Ansprüche 1 bis 8, dadurch gekennzeichnet, daß in der elektronischen Schalteinrichtung (31) Schaltmittel (Figur 2) vorgesehen sind, mit denen das Funktionieren des 3/2-Wege-Magnetventils (32) überprüfbar ist.

FIG. 1

# FIG. 2